# EUROPEAN PATENT SPECIFICATION

(11) **EP 0 525 976 B1**
(45) Date of publication and mention of the grant of the patent: **30.09.1998**
(21) Application number: 92305838.2
(22) Date of filing: 25.06.1992
(51) Int. Cl.: G06T 5/40, H04N 5/20

(54) **Intensity correction device**
Vorrichtung zur Helligkeitskorrektur
Dispositif pour la correction d'intensité

(30) Priority: 28.06.1991 JP 158193/91
(43) Date of publication of application: 03.02.1993
(73) Proprietor: MATSUSHITA ELECTRIC INDUSTRIAL CO., LTD., Kadoma-shi, Osaka-fu, 571 (JP)
(72) Inventor: Izawa, Yosuke, Ibaraki-shi (JP); Okumura, Naoji, Minoo-shi (JP)
(74) Representative: Votier, Sidney David

(56) References cited:
- EP-A- 0 238 962
- EP-A- 0 258 673
- PROC. SPIE - INT. SOC. OPT. ENG. vol. 575, August 1985, pages 106 - 113 O'GORMAN ET AL. 'Entropy-constant image enhancement by histogram transformation'

## Description

### BACKGROUND OF THE INVENTION

The present invention relates to an intensity correction device for detecting features of an input image and automatically adjusting intensity of a video signal from a television receiver, a video tape recorder, a video projector or so forth for obtaining an optimal image.

In the recent years, there is a tendency for requiring higher picture quality for television receivers. For this, an intensity correction device which can automatically obtain an optimal intensity with detecting feature of an input image has been given higher importance.

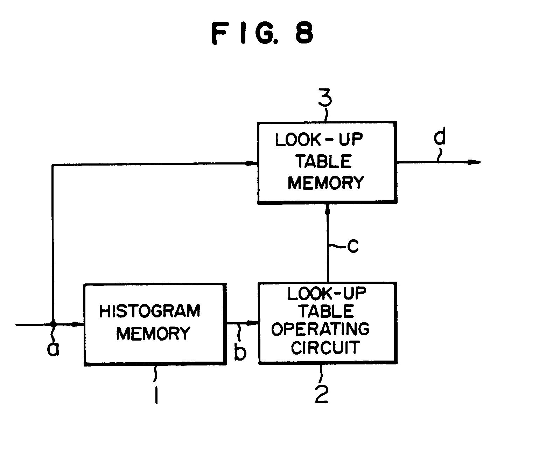

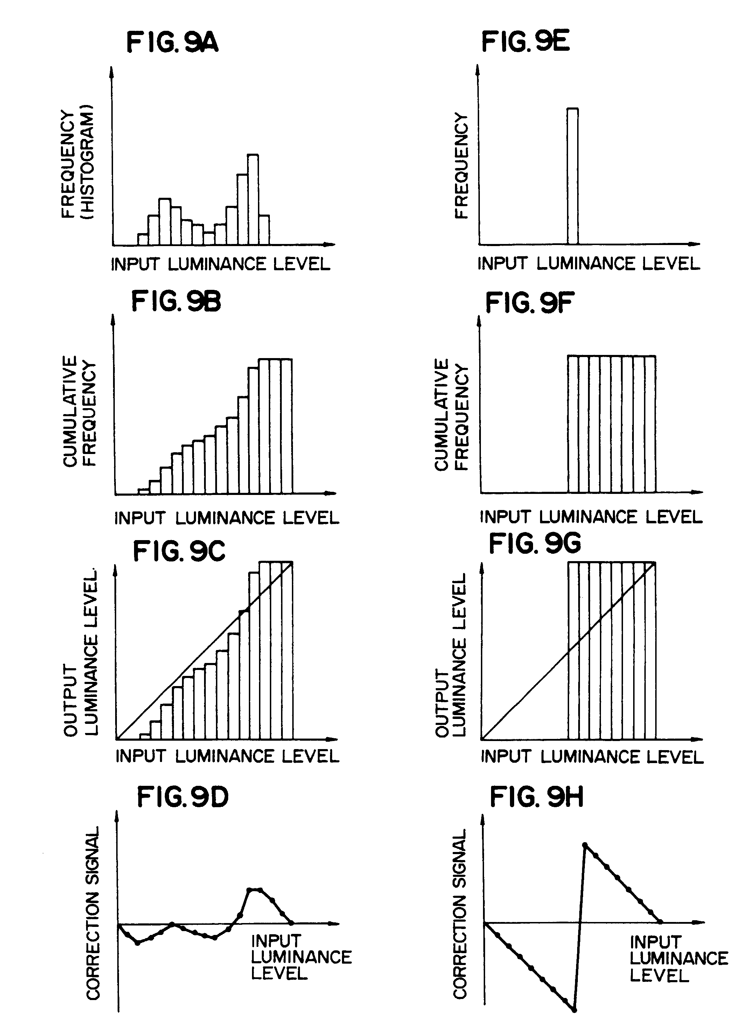

Discussion for the conventional intensity correction device will be given herebelow with reference to Figs. 8 and 9. Fig. 8 shows the construction of the conventional intensity correction device. In Fig. 8, the reference numeral 1 denotes a histogram memory for obtaining luminance distribution of an input luminance signal, 2 denotes a look-up table operating circuit for performing cumulation of a histogram and normalizing respective data so that the maximum cumulative frequency becomes coincident with a maximum value of an output luminance signal, 3 denotes a look-up table memory for storing the data normalized by the look-up table operating circuit 2 and permitting reading out of a correction signal corresponding to a luminance level of the input signal.

Operation of the intensity correction device constructed set forth above will be discussed herebelow with reference to Fig. 9.

Fig. 9 is a graph illustrating the manner of luminance conversion in the prior art.

At first, a histogram is established by dividing the input luminance level into appropriate numbers. Then, the luminance distribution of the input luminance signal a, as illustrated in Fig. 9A, is stored in the histogram memory 1. The content of this memory 1 is periodically cleared to set respective data zero. The interval for clearing the data in the memory 1 is typically selected in a period corresponding to a vertical scanning period or multiple thereof. Next, the look-up table operating circuit 2 cumulates the data of the histogram, calculates a normalizing coefficient so that the maximum cumulative frequency can be the maximum value of the output luminance level, and multiplies respective data of the histogram by the coefficient thus derived. The results are stored in the look-up table memory 3. These manners are illustrated in Figs. 9B and 9C. The look-up table memory 3 outputs a difference between the data corresponding to a luminance level of the input signal a and the luminance level as a correction signal d as shown in Fig. 9D. With this correction signal d, intensity correction is performed.

However, in the construction set forth above, when the input luminance signal is concentrated at a certain luminance level, the level is corrected in excessive manner as illustrated in Figs. 9E to 9H. In case of dynamic image of the television, this makes the corrected image far different from the actual image to rather degrade picture quality.

In EP-A-0258673 there is disclosed a method of and apparatus for processing an image according to a correction level. Tone correction for input video signals is performed by use of look-up table data. The degree of colour correction level is decided by using chroma signals each corresponding to a respective one of input video signals and a luminance signal of the input video signals. In response to the particular level decided, signals are produced by applying colour correction level adjustment to the individual input video signals. A highlight and a shadow point are set up based on a respective one of such adjusted signals so as to produce look-up table data for each of the input video signals. This allows input video data to be subjected to tone correction which matches with particular photographing conditions, thereby eliminating overcorrection.

In view of the drawback in the prior art as set forth above, it is an object of the present invention to provide an intensity correction device which reduces degree of correction or makes correction zero when an input luminance signal is concentrated at a certain luminance level.

In order to accomplish the above-mentioned object, an intensity correction device, according to a first aspect of the invention, comprises:
a histogram memory for storing a histogram of an input luminance signal;
a look-up table operating circuit for cumulating the histogram stored by said histogram memory and normalizing data of the histogram so that the maximum cumulative frequency becomes the maximum value of an output luminance signal;
a look-up table memory for storing the data normalized by said look-up table operating circuit and outputting a correction signal;
a maximum value detecting circuit for detecting the maximum value of the data of the histogram stored in said histogram memory; and
a multiplier for multiplying an inverse value of the maximum value detected by said maximum value detecting circuit with the correction signal outputted from said look-up table memory.

Also, an intensity correction device, according to a second aspect of the invention, comprises:
a histogram memory for storing a histogram of an input luminance signal;
a look-up table operating circuit for cumulating the histogram stored by said histogram memory and normalizing data of the histogram so that the maximum cumulative frequency becomes the maximum value of an output luminance signal;
a look-up table memory for storing the data normalized by said look-up table operating circuit and outputting a correction signal;
a maximum value detecting circuit for detecting a maximum value of differences between respective data normalized by said look-up table operating circuit; and
a multiplier for multiplying an inverse value of the maximum value detected by said maximum value detecting circuit with the correction signal outputted from said look-up table memory.

Furthermore, an intensity correction device, according to a third aspect of the invention, comprises:
a histogram memory for storing a histogram of an input luminance signal;
a look-up table operating circuit for cumulating the histogram stored by said histogram memory and normalizing data of the histogram so that the maximum cumulative frequency becomes the maximum value of an output luminance signal;
a look-up table memory for storing the data normalized by said look-up table operating circuit and outputting a correction signal;
a maximum value detecting circuit for detecting a maximum value of differences between respective data normalized by said look-up table operating circuit; and
a limiter for setting the correction signal outputted from said look-up table memory to zero when the maximum value detected by said maximum value detecting circuit exceeds a predetermined value.

In addition, an intensity correction device, according to a fourth aspect of the invention, comprises:
a histogram memory for storing a histogram of an input luminance signal;
a look-up table operating circuit for cumulating the histogram stored by said histogram memory and normalizing data of the histogram so that the maximum cumulative frequency becomes the maximum value of an output luminance signal;
a look-up table memory for storing the data normalized by said look-up table operating circuit and outputting a correction signal;
a maximum value detecting circuit for detecting a maximum value of differences between respective data normalized by said look-up table operating circuit; and
a gain control circuit for varying a gain of the correction signal outputted from said look-up table memory depending upon the maximum value detected by said maximum value detecting circuit.

With the above-mentioned first aspect of the invention, by obtaining the histogram, detecting the maximum value of the data of the obtained histogram, and multiplying the inverse value of the maximum value and the correction signal, the magnitude of correction can be reduced when the luminance level of the input luminance signal is concentrated to the certain luminance level.

With the second aspect of the invention, by obtaining the histogram of the input luminance signal, cumulating the obtained histogram, normalizing so that the maximum cumulative frequency becomes the maximum value of the output luminance signal, detecting the maximum value of the difference of the normalized data and multiplying the inverse value of the maximum value and the correction signal, the magnitude of correction can be reduced when the luminance level of the input luminance signal is concentrated to the certain luminance level.

With the third aspect of the invention, by obtaining the histogram of the input luminance signal, cumulating the obtained histogram, normalizing so that the maximum cumulative frequency becomes the maximum value of the output luminance signal, detecting the maximum value of the difference of the normalized data and making the correction signal to zero when the maximum value exceeds a predetermined value, the correction can be made zero when the input luminance signal is concentrated to the certain luminance level.

With the fourth aspect of the invention, by obtaining the histogram of the input luminance signal, cumulating the obtained histogram, normalizing so that the maximum cumulative frequency becomes the maximum value of the output luminance signal, detecting the maximum value of the difference of the normalized data and varying the gain of the correction signal depending upon the maximum value, the magnitude of correction can be reduced when the input luminance signal is concentrated to the certain luminance level.

### BRIEF DESCRIPTION OF THE DRAWINGS

Fig. 1 is a block diagram of the first embodiment of an intensity correction device according to the present invention;
Fig. 2 is a graph for illustrating operation of the shown embodiment of the intensity correction device;
Fig. 3 is a block diagram of the second embodiment of an intensity correction device according to the present invention;
Fig. 4 is a graph for illustrating operation of the second embodiment of the intensity correction device;
Fig. 5 is a block diagram of the third embodiment of an intensity correction device according to the present invention;
Fig. 6 is a block diagram of the fourth embodiment of an intensity correction device according to the present invention;
Fig. 7 is a graph showing a relationship between a maximum value and an intensity-correction signal;
Fig. 8 is a block diagram of the conventional intensity correction device; and
Fig. 9 is a graph for illustrating operation of the prior art.

### DESCRIPTION OF THE PREFERRED EMBODIMENT

The referred embodiments of the present invention will be discussed herebelow with reference to the accompanying drawings.

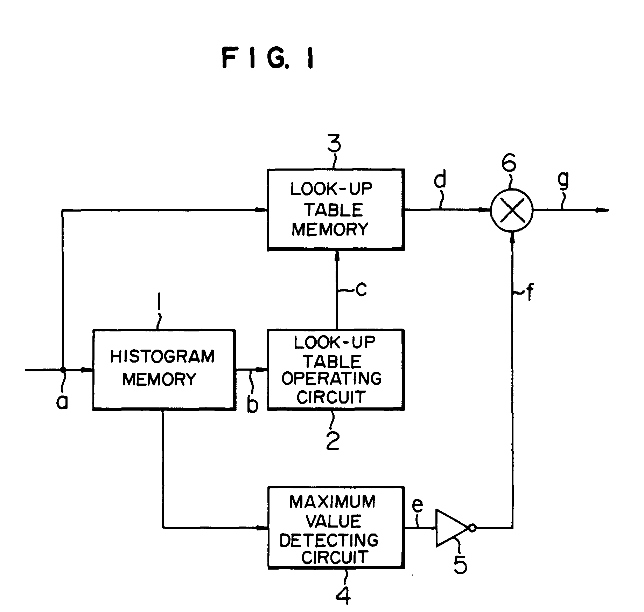

Fig. 1 is a block diagram showing the first embodiment of an intensity correction device according to the present invention. In Fig. 1, the reference numeral 1 denotes a histogram for detecting luminance distribution of an input luminance signal. The reference numeral 2 denotes a look-up table operating circuit 2 for cumulating the histogram and normalizing respective data so that the maximum cumulative frequency becomes the maximum value of an output luminance signal, 3 denotes a look-up table memory for storing the data normalized by the look-up table operating circuit 2 and permitting reading out of a correction signal corresponding to the luminance level of the input signal. The reference numeral 4 denotes a maximum value detecting circuit for detecting a maximum value of the data of the histogram obtained at the histogram memory 1. The reference numeral 5 denotes an invertor for obtaining an inverse value of the maximum value obtained at the maximum value detecting circuit 4. The reference numeral 6 denotes a multiplier for multiplying the inverse value of the maximum value obtained through the invertor 5 by the correction signal read out from the look-up table memory 3.

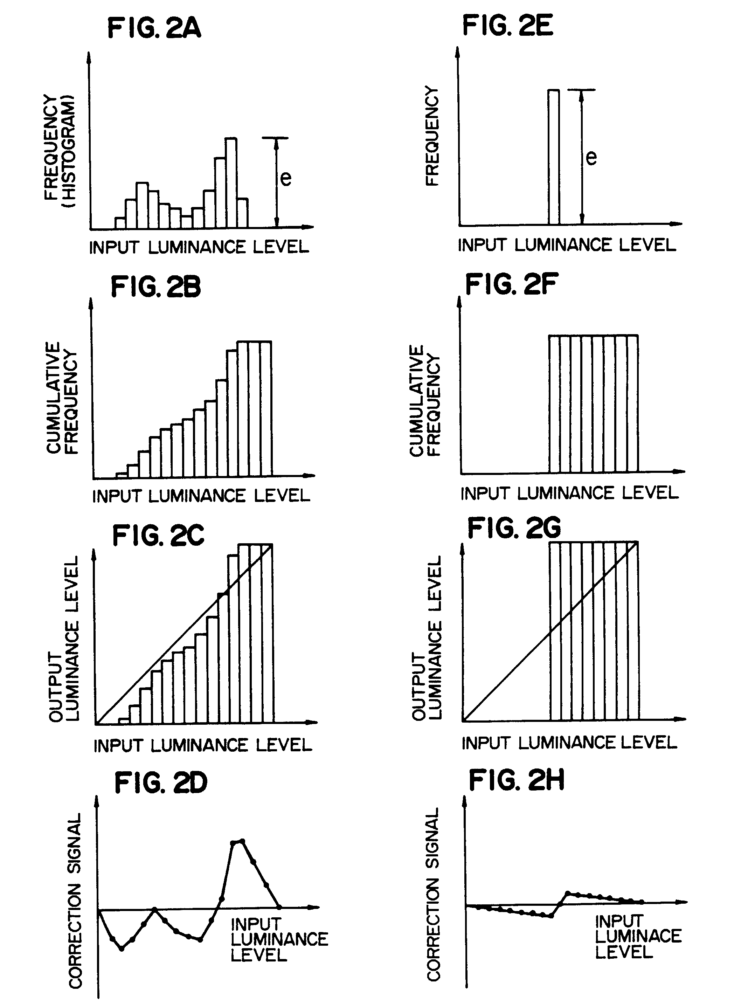

Operation of the first embodiment of the intensity correction device constructed as set forth above will be discussed with reference to Fig. 2. Fig. 2 shows the manner of luminance conversion.

At first, the histogram is established by dividing the input luminance level into appropriate numbers. Then, the luminance distribution of the input luminance signal a as illustrated in Fig. 2A is stored in the histogram memory 1. The content of the memory 1 is periodically cleared so as to set respective data zero. This period is typically selected at a period corresponding to one vertical scanning period or the multiple thereof. Then, the look-up table operating circuit 2 cumulates the histogram, calculates a normalization coefficient so that the maximum cumulative frequency becomes the maximum value of the output luminance level, and multiplies respective data of the histogram by the coefficient thus derived. The results are stored in the look-up table memory 3. The manners of this process are shown in Figs. 2B and 2C. The look-up table memory 3 outputs a difference between the data corresponding to a luminance level of the input signal a and the luminance level as a correction signal d. On the other hand, the maximum value detecting circuit 4 detects the maximum value e of the data obtained at the histogram memory 1. Then, in the invertor 5, an inverse value f of the maximum value e is derived. The multiplier 6 multiplies the inverse value f of the maximum value e by the correction signal d. Through this process, the intensity correction signal g as illustrated in Fig. 2D can be derived so that intensity correction can be performed with this intensity correction signal g.

According to the shown embodiment as set forth above, when the luminance level of the input signal is concentrated to a certain luminance level, since the maximum value e becomes large, the intensity correction signal g becomes small as shown in Figs. 2E to 2H. As a result, the magnitude of intensity correction can be made smaller.

The second embodiment of an intensity correction device according to the present invention will be discussed herebelow with reference to the drawings.

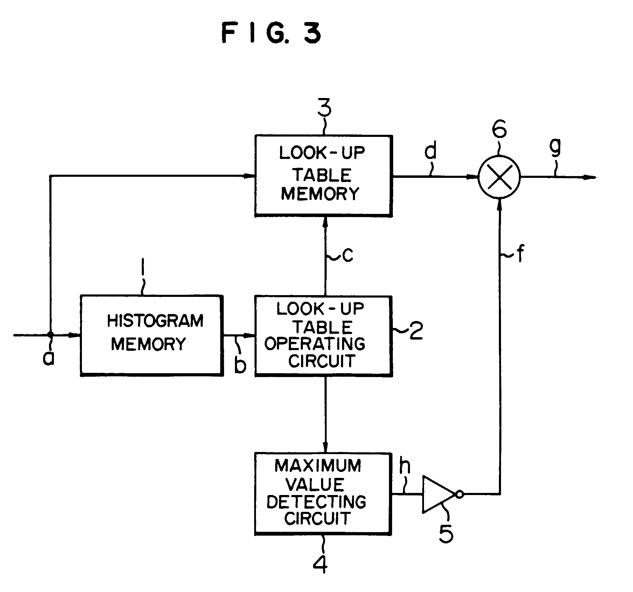

Fig. 3 is a block diagram showing the second embodiment of the intensity correction device according to the present invention. In Fig. 3, the reference numeral 1 denotes a histogram for detecting luminance distribution of an input luminance signal. The reference numeral 2 denotes a look-up table operating circuit 2 for cumulating the histogram and normalizing respective data so that the maximum cumulative frequency becomes the maximum value of an output luminance signal, 3 denotes a look-up table memory for storing the data normalized by the look-up table operating circuit 2 and permitting reading out of a correction signal corresponding to the luminance level of the input signal. The reference numeral 4 denotes a maximum value detecting circuit for detecting a maximum value of the normalized of the histogram obtained at the histogram memory 1. The reference numeral 5 denotes an invertor for obtaining an inverse value of the maximum value obtained at the maximum value detecting circuit 4. The reference numeral 6 denotes a multiplier for multiplying the inverse value of the maximum value obtained through the invertor 5 by the correction signal read out from the look-up table memory 3.

Operation of the second embodiment of the intensity correction device constructed as set forth above will be discussed with reference to Figs. 2, 4 and 7. Fig. 2 shows manner of luminance conversion.

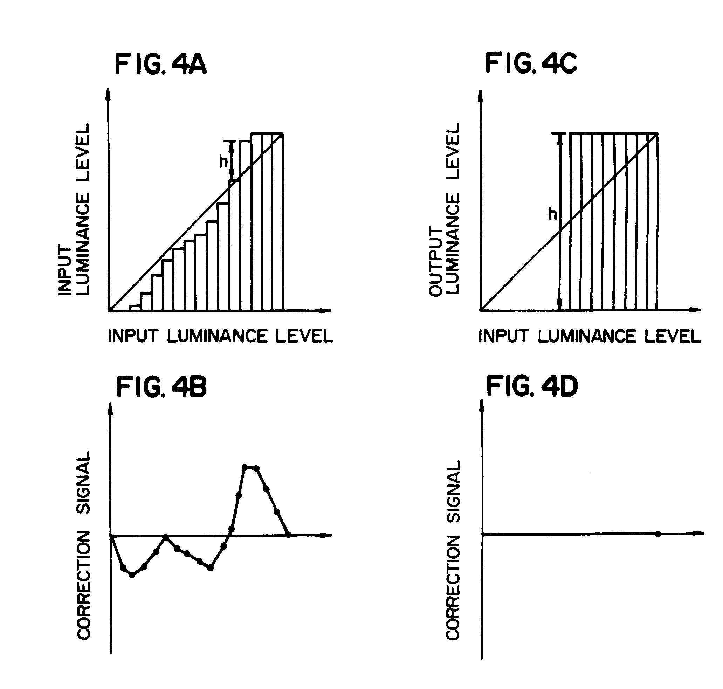

At first, the histogram is established by dividing the input luminance level into appropriate numbers. Then, the luminance distribution of the input luminance signal a as illustrated in Fig. 2A is stored in the histogram memory 1. The content of the memory 1 is periodically cleared so as to set respective data zero. This period is typically selected at a period corresponding to one vertical scanning period or the multiple thereof. Then, the look-up table operating circuit 2 cumulates the histogram, calculates a normalization coefficient so that the maximum cumulative frequency becomes the maximum value of the output luminance level, and multiplies respective data of the histogram by the coefficient thus derived. The results are stored in the look-up table memory 3. The manners of this process are shown in Figs. 2B and 2C. The look-up table memory 3 outputs a difference between the data corresponding to a luminance level of the input signal a and the luminance level as a correction signal d. On the other hand, the maximum value detecting circuit 4 detects the maximum value h of the difference of data obtained at the look-up table operating circuit 2. Then, in the invertor 5, an inverse value f of the maximum value h is derived. The multiplier 6 multiplies the inverse value f of the maximum value e by the correction signal d. Through these process, the intensity correction signal g as illustrated in Fig. 4B can be derived so that intensity correction can be performed with this intensity correction signal g.

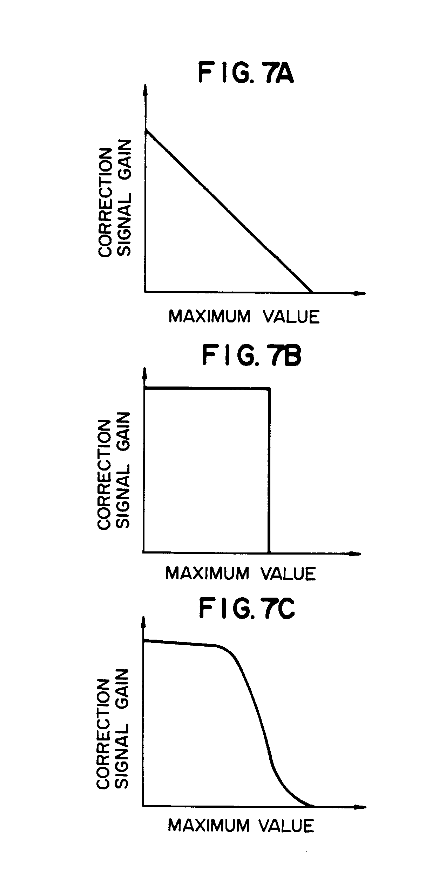

According to the second embodiment as set forth above, when the luminance level of the input signal is concentrated to a certain luminance level, since the maximum value h becomes large, the intensity correction signal g becomes small as shown in Figs. 4C and 4D. The relationship between the maximum value h and the intensity correction signal g is illustrated in Fig. 7A. As can be appreciated, the shown embodiment is differentiated from the first embodiment, in that the maximum value of the difference of the normalized data is detected. Therefore, the upper limit of the maximum value of the difference is constant irrespective of the values of overall histogram. As a result, the intensity correction signal g corresponding to the luminance distribution can be easily obtained. Also, when the luminance level is concentrated, the magnitude of intensity correction can be made smaller.

The third embodiment of the intensity correction device according to the present invention will be discussed herebelow with reference to the drawings.

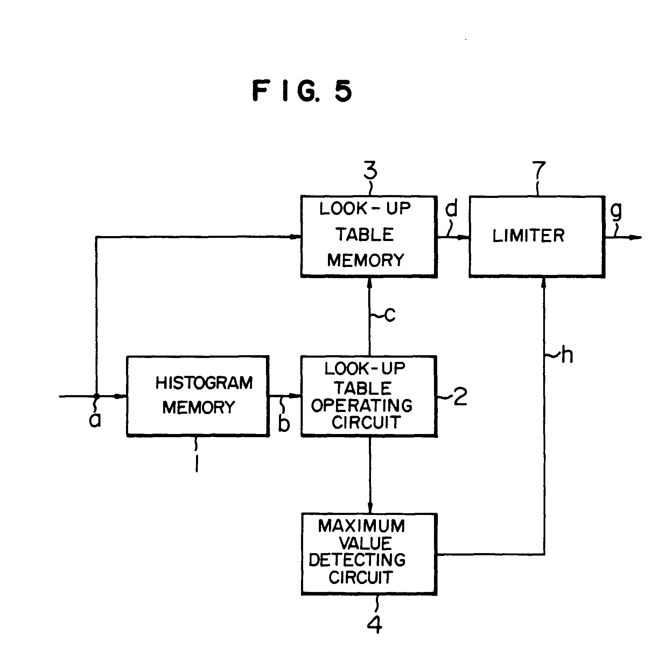

Fig. 5 is a block diagram showing the third embodiment of the intensity correction device according to the present invention. In Fig. 5, the reference numeral 1 denotes a histogram for detecting luminance distribution of an input luminance signal. The reference numeral 2 denotes a look-up table operating circuit 2 for cumulating the histogram and normalizing respective data so that the maximum cumulative frequency becomes the maximum value of an output luminance signal, 3 denotes a look-up table memory for storing the data normalized by the look-up table operating circuit 2 and permitting reading out of a correction signal corresponding to the luminance level of the input signal. The reference numeral 4 denotes a maximum value detecting circuit for detecting a maximum value of the normalized of the histogram obtained at the histogram memory 1. The reference numeral 5 denotes an invertor for obtaining an inverse value of the maximum value obtained at the maximum value detecting circuit 4. The reference numeral 7 denotes a limiter for setting the correction signal to zero when the maximum value obtained by the maximum value detecting circuit 4 exceeds a given value.

Operation of the third embodiment of the intensity correction device constructed as set forth above will be discussed with reference to Figs. 2, 4 and 7. Fig. 2 shows manner of luminance conversion.

At first, the histogram is established by dividing the input luminance level into an appropriate numbers. Then, the luminance distribution of the input luminance signal a as illustrated in Fig. 2A is stored in the histogram memory 1. The content of the memory 1 is periodically cleared so as to set respective data zero. This period is typically selected at a period corresponding to one vertical scanning period or the multiple thereof. Then, the look-up table operating circuit 2 cumulates the histogram, calculates a normalization coefficient so that the maximum cumulative frequency becomes the maximum value of the output luminance level, and multiplies respective data of the histogram by the coefficient thus derived. The results are stored in the look-up table memory 3. The manners of this process are shown in Figs. 2B and 2C. The look-up table memory 3 outputs a difference between the data corresponding to a luminance level of the input signal a and the luminance level as a correction signal d. On the other hand, the maximum value detecting circuit 4 detects the maximum value h of the difference of data obtained at the look-up table operating circuit 2. Then, by the litter 7. when the maximum value h exceeds the given value, the intensity correction signal g which makes the correction signal d zero, is obtained.

With the third embodiment of the intensity correction device according to the present invention, when the input luminance signal is concentrated at a certain luminance level, the maximum value h is increased to exceed the given value. Then, the intensity correction signal g becomes zero. The relationship between the maximum value h and the intensity correction signal g is illustrated in Fig. 7B. Conversely to the foregoing second embodiment, the shown embodiment of the intensity correction device do not effect intensity correction when the maximum value h exceeds the given value.

The fourth embodiment of the intensity correction device according to the present invention will be discussed herebelow with reference to the drawings.

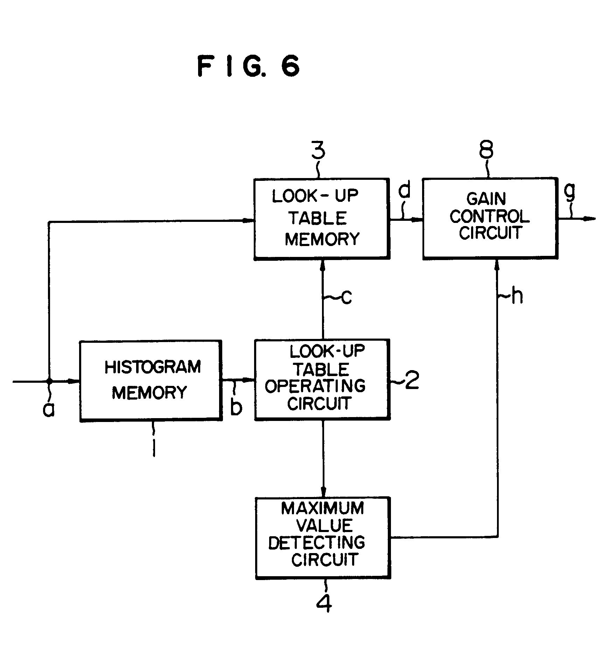

Fig. 6 is a block diagram showing the fourth embodiment of the intensity correction device according to the present invention. In Fig. 6, the reference numeral 1 denotes a histogram for detecting luminance distribution of an input luminance signal. The reference numeral 2 denotes a look-up table operating circuit 2 for cumulating the histogram and normalizing respective data so that the maximum cumulative frequency becomes the maximum value of an output luminance signal, 3 denotes a look-up table memory for storing the data normalized by the look-up table operating circuit 2 and permitting reading out of a correction signal corresponding to the luminance level of the input signal. The reference numeral 4 denotes a maximum value detecting circuit for detecting a maximum value of the normalized of the histogram obtained at the histogram memory 1. The reference numeral 5 denotes an invertor for obtaining an inverse value of the maximum value obtained at the maximum value detecting circuit 4. The reference numeral 8 denotes a gain control circuit for varying gain of the correction signal d depending upon the maximum value obtained at the maximum value detecting circuit 4.

Operation of the fourth embodiment of the intensity correction device constructed as set forth above will be discussed with reference to Figs. 2, 4 and 7. Fig. 2 shows manner of luminance conversion.

At first, the histogram is established by dividing the input luminance level into an appropriate numbers. Then, the luminance distribution of the input luminance signal a as illustrated in Fig. 2A is stored in the histogram memory 1. The content of the memory 1 is periodically cleared so as to set respective data zero. This period is typically selected at a period corresponding to one vertical scanning period or the multiple thereof. Then, the look-up table operating circuit 2 cumulates the histogram, calculates a normalization coefficient so that the maximum cumulative frequency becomes the maximum value of the output luminance level, and multiplies respective data of the histogram by the coefficient thus derived. The results are stored in the look-up table memory 3. The manners of this process are shown in Figs. 2B and 2C. The look-up table memory 3 outputs a difference between the data corresponding to a luminance level of the input signal a and the luminance level as a correction signal d. On the other hand, the maximum value detecting circuit 4 detects the maximum value h of the difference of data obtained at the look-up table operating circuit 2. Then, by the gain control circuit 8, the intensity correction signal g varying the gain of the correction signal d depending upon the maximum value h is obtained. The intensity correction is thus performed with this intensity correction signal g.

With the fourth embodiment as set forth above, when the input luminance signal is concentrated at the certain luminance level, the maximum value h becomes larger. In such case, the gain of the correction signal d is controlled by the gain control circuit 8 so as to make the intensity correction signal g smaller. One example of the relationship between the maximum value h and the intensity correction signal g is illustrated in Fig. 7C. Different from the foregoing third embodiment of the intensity correction device, the shown embodiment performs smooth variation of the gain so that intensity correction can be done without causing noticeable variation of intensity.

It should be noted that, although the all of the shown embodiment employ the histogram memory 1, the histogram memory can be a cumulative histogram which derives cumulative histogram. In such case, the cumulative function of the look-up table operating circuit 2 can be neglected.

## Claims

1. An intensity correction device comprising:
a histogram memory (1) for storing a histogram of an input luminance signal;
a look-up table operating circuit (2) for cumulating the histogram stored by said histogram memory (1) and normalizing data of the histogram so that the maximum cumulative frequency becomes the maximum value of an output luminance signal;
a look-up table memory (3) for storing the data normalized by said look-up table operating circuit (2) and outputting a correction signal;
a maximum value detecting circuit (4) for detecting the maximum value of the data of the histogram stored in said histogram memory (1); and
a multiplier (6) for multiplying an inverse value of the maximum value detected by said maximum value detecting circuit (4) with the correction signal outputted from said look-up table memory (3).

2. An intensity correction device comprising:
a histogram memory (1) for storing a histogram of an input luminance signal;
a look-up table operating circuit (2) for cumulating the histogram stored by said histogram memory (1) and normalizing data of the histogram so that the maximum cumulative frequency becomes the maximum value of an output luminance signal;
a look-up table memory (3) for storing the data normalized by said look-up table operating circuit (2) and outputting a correction signal;
a maximum value detecting circuit (4) for detecting a maximum value of differences between respective data normalized by said look-up table operating circuit (2); and
a multiplier (6) for multiplying an inverse value of the maximum value detected by said maximum value detecting circuit (4) with the correction signal outputted from said look-up table memory (3).

3. An intensity correction device comprising:
a histogram memory (1) for storing a histogram of an input luminance signal;
a look-up table operating circuit (2) for cumulating the histogram stored by said histogram memory (1) and normalizing data of the histogram so that the maximum cumulative frequency becomes the maximum value of an output luminance signal;
a look-up table memory (3) for storing the data normalized by said look-up table operating circuit (2) and outputting a correction signal;
a maximum value detecting circuit (4) for detecting a maximum value of differences between respective data normalized by said look-up table operating circuit (2); and
a limiter (7) for setting the correction signal outputted from said look-up table memory to zero when the maximum value detected by said maximum value detecting circuit (4) exceeds a predetermined value.

4. An intensity correction device comprising:
a histogram memory (1) for storing a histogram of an input luminance signal;
a look-up table operating circuit (2) for cumulating the histogram stored by said histogram memory and normalizing data of the histogram so that the maximum cumulative frequency becomes the maximum value of an output luminance signal;
a look-up table memory (3) for storing the data normalized by said look-up table operating circuit (2) and outputting a correction signal;
a maximum value detecting circuit (4) for detecting a maximum value of differences between respective data normalized by said look-up table operating circuit (2); and
a gain control circuit (8) for varying a gain of the correction signal outputted from said look-up table memory depending upon the maximum value detected by said maximum value detecting circuit (4).

## Patentansprüche

1. Intensitätskorrekturvorrichtung mit:
einem Histogrammspeicher (1) zum Speichern eines Histogramms eines Eingangsluminanzsignals;
einer Look-up-Tabellen-Betriebsschaltung (2) zum Kumulieren des von dem Histogrammspeicher (1) gespeicherten Histogramms und Normalisieren von Daten des Histogramms in solcher Weise, daß die Maximalkumulierfrequenz der Maximalwert eines Ausgangsluminanzsignals wird;
einem Look-up-Tabellen-Speicher (3) zum Speichern der von der Look-up-Tabellen-Betriebsschaltung (2) normalisierten Daten und Ausgeben eines Korrektursignals;
einer Maximalwerterfassungsschaltung (4) zum Erfassen des Maximalwerts der Daten des in dem Histogrammspeicher (1) gespeicherten Histogramms; und
einem Multiplizierer (6) zum Multiplizieren eines inversen Werts des von der Maximalwerterfassungsschaltung (4) erfaßten Maximalwerts mit dem aus dem Look-up-Tabellen-Speicher (3) ausgegebenen Korrektursignal.

2. Intensitätskorrekturvorrichtung mit:
einem Histogrammspeicher (1) zum Speichern eines Histogramms eines Eingangsluminanzsignals;
einer Look-up-Tabellen-Betriebsschaltung (2) zum Kumulieren des von dem Histogrammspeicher (1) gespeicherten Histogramms und Normalisieren von Daten des Histogramms in solcher Weise, daß die Maximalkumulierfrequenz der Maximalwert eines Ausgangsluminanzsignals wird;
einem Look-up-Tabellen-Speicher (3) zum Speichern der von der Look-up-Tabellen-Betriebsschaltung (2) normalisierten Daten und Ausgeben eines Korrektursignals;
einer Maximalwerterfassungsschaltung (4) zum Erfassen eines Maximalwerts von Differenzen zwischen von der Look-up-Tabellen-Betriebsschaltung (2) normalisierten jeweiligen Daten; und
einem Multiplizierer (6) zum Multiplizieren eines inversen Werts des von der Maximalwerterfassungsschaltung (4) erfaßten Maximalwerts mit dem aus dem Look-up-Tabellen-Speicher (3) ausgegebenen Korrektursignal.

3. Intensitätskorrekturvorrichtung mit:
einem Histogrammspeicher (1) zum Speichern eines Histogramms eines Eingangsluminanzsignals;
einer Look-up-Tabellen-Betriebsschaltung (2) zum Kumulieren des von dem Histogrammspeicher (1) gespeicherten Histogramms und Normalisieren von Daten des Histogramms in solcher Weise, daß die Maximalkumulierfrequenz der Maximalwert eines Ausgangsluminanzsignals wird;
einem Look-up-Tabellen-Speicher (3) zum Speichern der von der Look-up-Tabellen-Betriebsschaltung (2) normalisierten Daten und Ausgeben eines Korrektursignals;
einer Maximalwerterfassungsschaltung (4) zum Erfassen eines Maximalwerts von Differenzen zwischen von der Look-up-Tabellen-Betriebsschaltung (2) normalisierten jeweiligen Daten; und
einem Begrenzer (7) zum das aus dem Look-up-Tabellen-Speicher ausgegebene Korrektursignal auf Null Setzen, wenn der von der Maximalwerterfassungsschaltung (4) erfaßte Maximalwert einen vorbestimmten Wert überschreitet.

4. Intensitätskorrekturvorrichtung mit:
einem Histogrammspeicher (1) zum Speichern eines Histogramms eines Eingangsluminanzsignals;
einer Look-up-Tabellen-Betriebsschaltung (2) zum Kumulieren des von dem Histogrammspeicher gespeicherten Histogramms und Normalisieren von Daten des Histogramms in solcher Weise, daß die Maximalkumulierfrequenz der Maximalwert eines Ausgangsluminanzsignals wird;
einem Look-up-Tabellen-Speicher (3) zum Speichern der von der Look-up-Tabellen-Betriebsschaltung (2) normalisierten Daten und Ausgeben eines Korrektursignals;
einer Maximalwerterfassungsschaltung (4) zum Erfassen eines Maximalwerts von Differenzen zwischen von der Look-up-Tabellen-Betriebsschaltung (2) normalisierten jeweiligen Daten; und
einer Verstärkungssteuerschaltung (8) zum Variieren einer Verstärkung des aus dem Look-up-Tabellen-Speicher ausgegebenen Korrektursignals abhängig von dem von der Maximalwerterfassungsschaltung (4) erfaßten Maximalwert.

## Revendications

1. Dispositif de correction d'intensité comprenant :
une mémoire (1) d'histogramme pour stocker un histogramme d'un signal de luminance d'entrée ;
un circuit (2) d'exploitation de table de consultation pour cumuler l'histogramme stocké par ladite mémoire (1) d'histogramme et normaliser les données de l'histogramme de façon à ce que la fréquence cumulative maximale devienne la valeur maximale d'un signal de luminance de sortie ;
une mémoire (3) de table de consultation pour stocker les données normalisées par ledit circuit (2) d'exploitation de table de consultation et fournir en sortie un signal de correction ;
un circuit (4) de détection de valeur maximale pour détecter la valeur maximale des données de l'histogramme stocké dans ladite mémoire (1) d'histogramme ; et
un multiplieur (6) pour multiplier une valeur inverse de la valeur maximale détectée par ledit circuit (4) de détection de valeur maximale par le signal de correction fourni en sortie par ladite mémoire (3) de table de consultation.

2. Dispositif de correction d'intensité comprenant :
une mémoire (1) d'histogramme pour stocker un histogramme d'un signal de luminance d'entrée ;
un circuit (2) d'exploitation de table de consultation pour cumuler l'histogramme stocké par ladite mémoire (1) d'histogramme et normaliser les données de l'histogramme de façon à ce que la fréquence cumulative maximale devienne la valeur maximale d'un signal de luminance de sortie ;
une mémoire (3) de table de consultation pour stocker les données normalisées par ledit circuit (2) d'exploitation de table de consultation et fournir en sortie un signal de correction ;
un circuit (4) de détection de valeur maximale pour détecter une valeur maximale de différence entre des données respectives normalisées par ledit circuit (2) d'exploitation de table de consultation ; et
un multiplieur (6) pour multiplier une valeur inverse de la valeur maximale détectée par le circuit (4) de détection de valeur maximale par le signal de correction fourni en sortie par ladite mémoire (3) de table de consultation.

3. Dispositif de correction d'intensité, comprenant :
une mémoire (1) d'histogramme pour stocker un histogramme d'un signal de luminance d'entrée ;
un circuit (2) d'exploitation de table de consultation pour cumuler l'histogramme stocké par ladite mémoire (1) d'histogramme et normaliser les données de l'histogramme de façon à ce que la fréquence cumulative maximale devienne la valeur maximale d'un signal de luminance de sortie ;
une mémoire (3) de table de consultation pour stocker les données normalisées par ledit circuit (2) d'exploitation de table de consultation et fournir en sortie un signal de correction ;
un circuit (4) de détection de valeur maximale pour détecter une valeur maximale de différence entre des données respectives normalisées par ledit circuit (2) d'exploitation de table de consultation ; et
un limiteur (7) pour fixer à zéro le signal de correction fourni en sortie par ladite mémoire de table de consultation lorsque la valeur maximale détectée par ledit circuit (4) de détection de valeur maximale dépasse une valeur prédéterminée.

4. Dispositif de correction d'intensité, comprenant :
une mémoire (1) d'histogramme pour stocker un histogramme d'un signal de luminance d'entrée ;
un circuit (2) d'exploitation de table de consultation pour cumuler l'histogramme stocké par ladite mémoire d'histogramme et normaliser les données de l'histogramme de façon à ce que la fréquence cumulative maximale devienne la valeur maximale d'un signal de luminance de sortie ;
une mémoire (3) de table de consultation pour stocker les données normalisées par ledit circuit (2) d'exploitation de table de consultation et fournir en sortie un signal de correction ;
un circuit (4) de détection de valeur maximale pour détecter une valeur maximale de différence entre des données respectives normalisées par ledit circuit (2) d'exploitation de table de consultation ; et
un circuit (8) de commande gain pour faire varier un gain du signal de correction fourni en sortie par ladite mémoire de table de consultation en fonction de la valeur maximale détectée par ledit circuit (4) de détection de valeur maximale.
